(19)

Europäisches
Patentamt
European
Patent Office
Office européen
des brevets

(11) **EP 4 395 316 A2**

(12) # DEMANDE DE BREVET EUROPEEN

(43) Date de publication:
**03.07.2024 Bulletin 2024/27**

(21) Numéro de dépôt: **24176186.5**

(22) Date de dépôt: **11.08.2015**

(51) Classification Internationale des Brevets (IPC):
***H04N 19/132*** *(2014.01)*

(52) Classification Coopérative des Brevets (CPC):
**H04N 19/147; H04N 19/12; H04N 19/132; H04N 19/593;** H04N 19/97

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.08.2014 FR 1457768**

(62) Numéro(s) de document de la (des) demande(s) initiale(s) en application de l'article 76 CBE:
**15759896.2 / 3 180 914**

(71) Demandeur: **Orange**
**92130 Issy-les-Moulineaux (FR)**

(72) Inventeurs:
- **Pierrick, PHILIPPE**
**92326 Chatillon (FR)**
- **Adrià, ARRUFAT**
**92326 Chatillon (FR)**

Remarques:
Cette demande a été déposée le 16-05-2024 comme demande divisionnaire de la demande mentionnée sous le code INID 62.

(54) **PROCÉDÉ DE DÉCODAGE D'IMAGES, DISPOSITIF DE DÉCODAGE D'IMAGES ET PROGRAMME D ORDINATEUR CORRESPONDANT**

(57) L'invention concerne un procédé de décodage d'un signal de données (F) représentatif d'au moins une image ($IC_j$) découpée en blocs, comprenant, pour un bloc courant ($B_u$) de K pixels à reconstruire, avec K≥1.

Selon l'invention, le procédé de décodage comprend les étapes consistant à :
- déterminer (D31) au moins un bloc prédicteur (BPopt) du bloc courant à reconstruire, ledit bloc prédicteur contenant K pixels,
- lire (D3), dans ledit signal de données (F), un ensemble de $M_i$<K données, avec i≥1 et 1≤$M_i$<K,
- lire (D35), dans ledit signal de données (F), une information d'identification d'un groupe (Gi) de blocs de pixels contenant un nombre donné Mi de blocs de K pixels représentatifs chacun d'une texture prédéterminée,
- identifier (D5) dans la mémoire du décodeur ledit groupe de blocs de pixels à partir de l'information lue,
- déterminer (D6) $M_i$ blocs de K pixels par calcul du produit de chacun des $M_i$ blocs de K pixels du groupe ($G_i$) identifié par, respectivement, chacune des $M_i$ données dudit ensemble de $M_i$ données lu,
- calculer (D7) la somme des $M_i$ blocs de K pixels déterminés,
- déterminer (D7) un bloc résidu courant décodé de K pixels à partir de la somme calculée,
- reconstruire (D8) le bloc courant à partir du bloc résidu courant décodé calculé et du bloc prédicteur ($BP_{opt}$) déterminé.

F
D1
IDENTIFICATION Bq1, Bq2,..., Bqu,..., BqS 1≤u≤S
D2
SELECT. BLOC QUANT. COURANT
Bqu
opt
i
D3
D31
LECT.
DECOD. ENTROP.
D4
DEQUANT.
BPopt
Xqu,1, Xqu,2,..., Xqu,Mi
i
D5
IDENTIFICATION GROUPE DE BLOCS DE TEXTURE PRÉDÉTERMINÉE BTi,1, BTi,2,...BTi,v,..., BTi,Mi
Gi
D6
(Xqu,1, Xqu,2,..., Xqu,Mi) * (BTi,1, BTi,2,...BTi,v,..., BTi,Mi)
D7
$x_{q_v} = \sum_{v=1}^{M_i} t_{i,v,g} X_{q_{u,v}}$
Bru
BPopt
Bru
D8
DECOD.
D9
Bu
ÉCRITURE Bu DANS IMAGE DÉCODÉE IDj
IDj

**FIG.6**



Processed by Luminess, 75001 PARIS (FR)

## Description

Domaine de l'invention

La présente invention se rapporte de manière générale au domaine du traitement d'images, et plus précisément au décodage d'images numériques et de séquences d'images numériques.

Le codage/décodage d'images numériques s'applique notamment à des images issues d'au moins une séquence vidéo comprenant :

- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D),
- etc...

La présente invention s'applique de manière similaire au décodage d'images de type 2D ou 3D.

L'invention peut notamment, mais non exclusivement, s'appliquer au décodage vidéo mis en oeuvre dans les décodeurs vidéo actuels AVC et HEVC et leurs extensions (MVC, 3D-AVC, MV-HEVC, 3D-HEVC, etc).

Art antérieur

Les codeurs vidéo actuels (MPEG, H.264, HEVC, ...) utilisent une représentation par blocs de la séquence vidéo. Les images sont découpées en blocs, lesquels sont susceptibles d'être redécoupés de façon récursive. Puis chaque bloc est codé par prédiction intra-images ou inter-images. Ainsi, certaines images sont codées par prédiction spatiale (prédiction intra), d'autres images sont également codées par prédiction temporelle (prédiction inter) par rapport à une ou plusieurs images de référence codées-décodées, à l'aide d'une compensation en mouvement connue par l'homme de l'art.

Pour chaque bloc est codé un bloc résidu, encore appelé résidu de prédiction, correspondant au bloc original diminué d'une prédiction. Les blocs résidus sont transformés à l'aide d'une opération mathématique de transformation, puis quantifiés à l'aide d'une opération mathématique de quantification par exemple de type scalaire. Des coefficients sont obtenus à l'issue de l'étape de quantification. Ils sont ensuite parcourus dans un ordre de lecture qui dépend du mode de codage qui a été choisi. Dans la norme HEVC, par exemple, l'ordre de lecture est dépendant de la prédiction réalisée et peut être effectué dans l'ordre « horizontal », « vertical » ou « diagonal ».

À l'issue du parcours précité, une liste monodimensionnelle de coefficients est obtenue. Les coefficients de cette liste sont alors codés sous forme de bits par un codage entropique dont le but est de coder les coefficients sans perte.

Les bits obtenus après codage entropique sont inscrits dans un signal flux de données qui est destiné à être transmis au décodeur.

De façon connue en soi, un tel signal comprend :

- les coefficients quantifiés contenus dans la liste précitée,
- des informations représentatives du mode de codage utilisé, en particulier:
  - le mode de prédiction (prédiction intra, prédiction inter, prédiction par défaut réalisant une prédiction pour laquelle aucune information n'est transmise au décodeur (« en anglais « skip »)) ;
  - des informations précisant le type de prédiction (orientation, image de référence, ...) ;
  - le type de découpage du bloc ;
  - le type de transformée, par exemple DCT 4x4, DCT 8x8, etc...
  - les informations de mouvement si nécessaire ;
  - etc.

Une fois que le flux a été reçu par le décodeur, le décodage est fait image par image, et pour chaque image, bloc par bloc. Pour chaque bloc, les éléments correspondants du flux sont lus. La quantification inverse et la transformation inverse des coefficients des blocs sont effectuées pour produire le résidu de prédiction décodé. Puis, la prédiction du bloc est calculée et le bloc est reconstruit en ajoutant la prédiction au résidu de prédiction décodé.

La technique de codage/décodage classique qui vient d'être décrite permet certes des améliorations des performances de codage et de décodage. Selon le contexte vidéo, elle permet notamment :

- une amélioration de la qualité des images pour un débit donné du réseau utilisé pour transmettre les images,
- un réduction du débit de transmission des images pour un critère de qualité d'images préalablement fixé.

Toutefois, de telles performances de codage/décodage ne sont actuellement pas optimisées et ont vocation à encore être améliorées, en particulier du point de vue de la minimisation du coût débit/distorsion ou bien du choix du meilleur compromis efficacité/complexité, qui sont des critères bien connus de l'homme du métier.

En particulier, une telle optimisation pourrait concerner l'opération de transformation mathématique précitée. Il s'agit classiquement d'une transformation linéaire qui, lorsqu'elle s'applique à un bloc résidu contenant un nombre déterminé de K pixels ($K \geq 1$), permet d'obtenir un ensemble de K coefficients réels.

Dans le domaine du codage/décodage vidéo, les transformées en cosinus discrète, DCT (abréviation anglaise de « Discrète Cosine Transform »), ou les transformées en sinus discrète, DST (abréviation anglaise de « Discrète Sine Transform »), sont généralement privilégiées, notamment pour les raisons suivantes :

- ce sont des transformées bloc et il est ainsi facile de manipuler les blocs indépendamment les uns des autres,
- elles sont efficaces pour compacter l'information dans le domaine fréquentiel, là où l'opération de réduction de débit opère.

Toutefois, avec de telles transformées, la complexité algorithmique du codeur vidéo augmente de façon notable dans le cas notamment où l'image à coder est découpée en blocs de grande taille, par exemple en blocs de taille 16x16 ou 32x32.

Par exemple, pour un bloc à coder de 16x16 pixels, un nombre K=256 pixels est destiné à subir une transformation du type précité.

De façon classique, une telle transformation consiste à appliquer une première opération de transformation A à un bloc résidu x de K pixels organisés sous forme d'une matrice 16x16, où A est une matrice de données ayant une taille identique à celle du bloc résidu x, c'est-à-dire 16x16 dans l'exemple présenté. À l'issue de cette première transformation est obtenu un premier bloc transformé A.x.

Une opération de transposition t est ensuite appliquée sur le bloc transformé A.x. À l'issue de cette transposition est obtenu un bloc transposé $(A.x)^t$.

Enfin, une deuxième opération de transformation A est appliquée sur le bloc transposé $(A.x)^t$. À l'issue de cette deuxième transformation est obtenu un deuxième bloc transformé X de K=16x16 pixels, tel que :

$$X = A \cdot (Ax)^t$$

Si on considère uniquement un bloc résidu x se présentant sous la forme d'une matrice colonne de 16 pixels, les algorithmes utilisés au codeur effectuent déjà de nombreuses opérations, telles que 2x81 additions et 2x33 multiplications, pour obtenir un bloc transformé X sous la forme d'une matrice colonne de 16 pixels. Ainsi, il apparait clairement que dans le cas du bloc résidu de 16x16 pixels de l'exemple présenté, les algorithmes utilisés au codeur doivent effectuer 16 fois le nombre d'opérations précitées, soit 16x2x81 additions et 16x2x33 multiplications, ce qui revient à effectuer au total 2592 additions et 1056 multiplications pour obtenir les K=256 coefficients transformés pour un bloc de taille 16x16.

Le tableau suivant résume le nombre d'opérations à effectuer suivant la taille du bloc de pixels courant à coder considéré, lorsqu'une transformation de type DCT est appliquée :

| DCT 2D | Additions | Multiplications |
|---|---|---|
| 4x4 | 72 | 40 |
| 8x8 | 464 | 208 |
| 16x16 | 2592 | 1056 |
| 32x32 | 13376 | 5184 |

Il se déduit du tableau ci-dessus, que, notamment pour les blocs de grande taille, 16x16 et 32x32, le nombre d'opérations devient particulièrement important.

En outre, dans le cas où la transformée est appliquée à des blocs de taille 16x16 ou 32x32, il s'ensuit l'obtention d'un grand nombre de coefficients, respectivement 256 ou 1024, qui sont par la suite quantifiés, puis codés par codage entropique.

Dans la norme HEVC par exemple, le codage entropique (par exemple de type codage arithmétique ou codage de Huffman) est effectué de la façon suivante :

- une information est codée entropiquement pour indiquer l'emplacement du dernier coefficient non nul de l'ensemble de coefficients quantifiés,
- pour chaque coefficient situé avant le dernier coefficient non nul, une information est codée entropiquement pour indiquer si le coefficient est nul ou pas,
- pour chaque coefficient non nul indiqué précédemment, une information est codée entropiquement pour indiquer si le coefficient est égal à un ou pas,
- pour chaque coefficient non nul et non égal à un situé avant le dernier coefficient non nul, une information d'amplitude (valeur absolue du coefficient diminuée de deux) est codée entropiquement,
- pour chaque coefficient non nul, le signe qui lui est affecté est codé par un '0' (pour le signe +) ou un '1' (pour le signe -).

Ainsi, plus le nombre de coefficients transformés est élevé, plus les opérations suivantes de quantification et de codage entropique sont complexes à effectuer.

Il convient de noter également que le très grand nombre de coefficients obtenus à la suite de telles transformées est très coûteux à signaler au décodeur et entraîne une réduction importante du gain en débit de transmission des données codées entre le codeur et le décodeur.

En ce qui concerne le décodage d'un bloc courant, par exemple un bloc courant à décoder de 16x16 pixels, les 256 coefficients obtenus à l'issue du codage entropique précité subissent une transformation similaire à celle effectué au codage.

Par conséquent, au décodeur, la complexité des algorithmes nécessaires à la transformation des coefficients obtenus à l'issue du codage entropique est la même que les algoritmes utrilisés au codeur pour effectuer la transformation du bloc résiduel courant.

Le document US 2013/0089151 décrit, dans le cadre d'un codage et décodage d'image, l'application d'une transformée de type DCT à un bloc résidu, laquelle est suivie d'une troncature de l'ensemble de coefficients transformés obtenus par cette transformée.

## Objet et résumé de l'invention

Un des buts de l'invention est de remédier à des inconvénients de l'état de la technique précité.

À cet effet, un objet de la présente invention concerne un procédé de décodage d'au moins une image découpée en blocs, tel que défini dans la revendication 1 annexée.

Puisque l'ensemble de données déterminé contient systématiquement un nombre Mi de données inférieur au nombre K de pixels du bloc courant, une telle disposition permet avantageusement de coder et décoder moins de données que dans l'art antérieur qui impose potentiellement K données à coder et décoder.

Selon un mode de réalisation particulier, le groupe (Gi) de blocs de pixels contenant un nombre donné Mi de blocs de K pixels représentatifs chacun d'une texture prédéterminée appartient à L groupes ($G_1$, $G_2$,...,$G_i$,..., $G_L$) de blocs de pixels contenant respectivement un nombre $M_1$, $M_2$,...,$M_i$,..., $M_L$ de blocs de K pixels représentatifs chacun d'une texture prédéterminée, avec $1 \leq i \leq L$..

Dans le cas où l'ensemble de données sélectionné contient un nombre de données inférieur au nombre K de pixels du bloc courant, une telle disposition permet de coder et décoder moins de données que dans l'art antérieur qui impose systématiquement K données à coder et décoder. Par ailleurs, du fait qu'un nombre plus important de groupes de blocs de texture est disponible au codage et au décodage, il est ainsi possible, au niveau du codeur, de tester plusieurs possibilités de coder un bloc courant, et, selon le contexte de codage, de satisfaire un compromis entre un nombre réduit de données à coder et décoder susceptible d'être obtenu et une qualité élevée de restitution de l'image reconstruite.

Selon un mode de réalisation particulier, l'ensemble de Mi données lu contient une seule donnée.

Une telle disposition permet avantageusement d'optimiser la réduction du coût de décodage et d'éviter d'indiquer la position de la donnée codée associée à l'ensemble de Mi données déterminé ou sélectionné, puisque Mi=1.

Selon un autre mode de réalisation particulier,

- un groupe parmi les L groupes $G_1$, $G_2$,...,$G_i$,..., $G_L$ de blocs de pixels contient K blocs de texture prédéterminée,
- les L-1 groupes restants de blocs de pixels contiennent chacun un unique bloc de texture prédéterminée.

Selon un autre mode de réalisation particulier, le procédé de décodage comprend en outre les étapes consistant à :

- lire dans le signal de données la valeur de la polarité du signe d'au moins une donnée dudit ensemble de Mi données lu,
- en fonction de la valeur de la polarité du signe lue et à partir de l'information d'identification de groupe de blocs de pixels lue dans le signal, identifier le bloc de K pixels représentatif d'une texture prédéterminée soit dans un premier ensemble qui contient une partie des L groupes de blocs de K pixels représentatifs chacun d'une texture prédéterminée, soit dans un deuxième ensemble qui contient l'autre partie des L groupes de blocs de K pixels représentatifs chacun d'une texture prédéterminée.

Une telle disposition permet de réduire significativement le gain en débit, grâce au fait qu'il est possible de réduire le cout de signalisation des L groupes de blocs de pixels contenant respectivement un nombre $M_1$, $M_2$,..., $M_i$,..., $M_L$ de blocs de K pixels représentatifs chacun d'une texture prédéterminée. Par exemple, si Mi=1, le signe positif ou négatif de l'unique donnée lue permet d'identifier 2L groupes de blocs de texture prédéterminée, lesquels sont codées et décodés sur log2(L) bits par exemple, plutôt que sur log2(2L) bits.

Les différents modes ou caractéristiques de réalisation précités peuvent être ajoutés indépendamment ou en combinaison les uns avec les autres, aux étapes du procédé de décodage tel que défini ci-dessus.

L'invention concerne également un dispositif de décodage tel que défini dans la revendication 6 annexée. Un tel dispositif de décodage est notamment apte à mettre en oeuvre le procédé de décodage précité.

L'invention concerne encore un programme d'ordinateur comportant des instructions pour mettre en oeuvre d'un procédé de décodage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé de décodage selon l'invention, tel que décrit cidessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de décodage précité.

## Brève description des dessins

D'autres caractéristiques et avantages apparaîtront à la lecture d'un mode de réalisation préféré décrit en référence aux figures annexées, dans lesquelles les aspects relatifs au codage ne relèvent pas de l'invention et ne sont présents qu'à titre illustratif, et dans lesquelles :

- la figure 1 représente les étapes d'un procédé de codage,
- la figure 2 représente un dispositif de codage,
- les figures 3A et 3B représentent respectivement un groupe de blocs de texture prédéterminée et plusieurs groupes de blocs de texture prédéterminée destinés à être utilisés dans le procédé de codage,
- la figure 4 représente certaines des étapes du procédé de codage selon un autre exemple,
- la figure 5 représente un mode de réalisation d'un dispositif de décodage selon l'invention,
- la figure 6 représente les principales étapes d'un procédé de décodage selon l'invention,
- la figure 7 représente des étapes complémentaires du procédé de décodage de la figure 6.

## Description détaillée de la partie codage

Un procédé de codage va maintenant être décrit, lequel est utilisé pour coder une image ou une séquence d'images selon un flux binaire proche de celui qu'on obtient par un codage conforme par exemple à la norme HEVC.

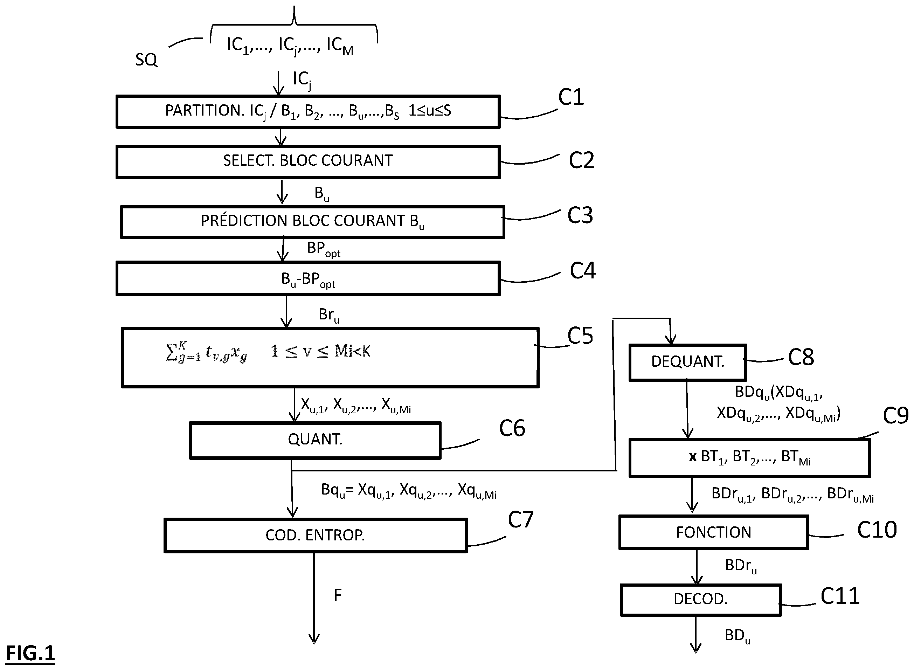

Le procédé de codage est par exemple implémenté de manière logicielle ou matérielle par modifications d'un codeur initialement conforme à la norme HEVC. Le procédé de codage est représenté sous la forme d'un algorithme comportant des étapes C1 à C11 telles que représentées à la **figure 1.**

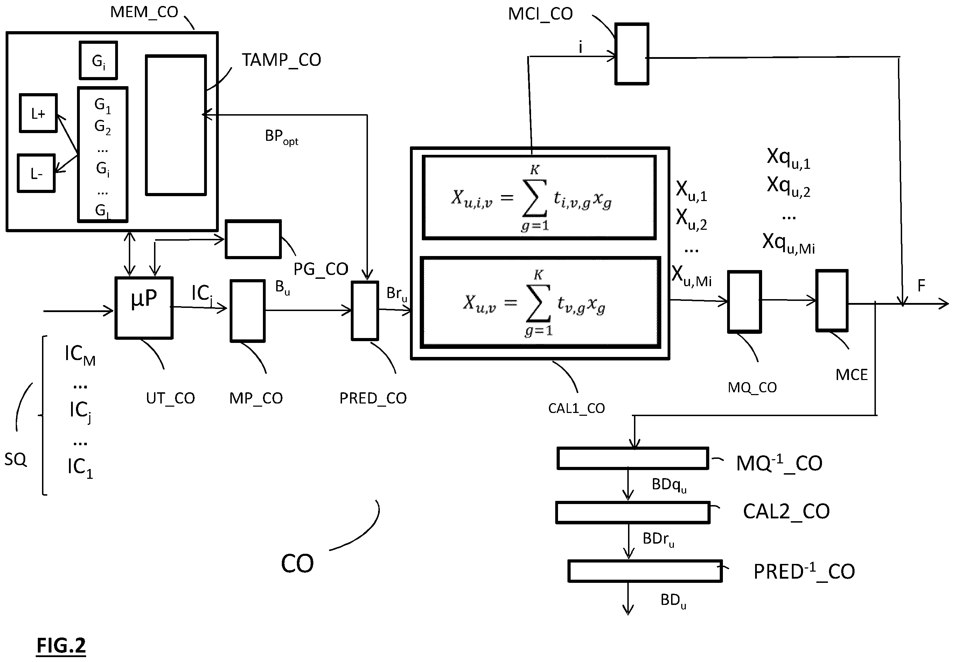

Ce procédé de codage est implémenté dans un dispositif de codage CO représenté à la **figure 2.**

Comme illustré en **figure 2,** un tel dispositif de codage comprend une mémoire MEM_CO comprenant une mémoire tampon TAMP_CO, une unité de traitement UT_CO équipée par exemple d'un microprocesseur $\mu$P et pilotée par un programme d'ordinateur PG_CO qui met en oeuvre le procédé de codage. A l'initialisation, les instructions de code du programme d'ordinateur PG_CO sont par exemple chargées dans une mémoire RAM (non représentée) avant d'être exécutées par le processeur de l'unité de traitement UT_CO.

Le procédé de codage représenté sur la **figure 1** s'applique à toute image courante d'une séquence SQ d'images à coder.

Au cours d'une étape C1 représentée à la **figure 1,** il est procédé, de façon connue en soi, au partitionnement d'une image courante $IC_j$ appartenant à la séquence SQ d'images $IC_1$, ..., $IC_j$, ... , $IC_M$ ($1 \leq j \leq M$), en une pluralité de blocs $B_1$, $B_2$, ..., $B_u$, ..., Bs ($1 \leq u \leq S$). Une telle étape de partitionnement est mise en oeuvre par un module logiciel de partitionnement MP_CO représenté sur la **figure 2,** lequel module est piloté par le microprocesseur $\mu$P de l'unité de traitement UT_CO. Il convient de noter qu'au sens de l'invention, le terme « bloc » signifie unité de codage et décodage (de l'anglais « coding unit »). Cette dernière terminologie est notamment utilisée dans la norme HEVC « ISO/IEC/23008-2 Recommandation ITU-T H.265 High Efficiency Video Coding (HEVC) ».

En particulier, une telle unité de codage regroupe des ensembles de pixels de forme rectangulaire ou carrée, encore appelés blocs, macroblocs, ou bien des ensembles de pixels présentant d'autres formes géométriques.

Lesdits blocs $B_1$, $B_2$, ..., $B_u$, ..., Bs sont destinés à être codés selon un ordre de parcours prédéterminé, qui est par exemple du type raster scan. Cela signifie que les blocs sont codés les uns après les autres, de la gauche vers la droite.

D'autres types de parcours sont bien sûr possibles. Ainsi, il est possible de découper l'image $IC_j$ en plusieurs sous-images appelées slices et d'appliquer indépendamment un découpage de ce type sur chaque sous-image. Il est également possible de coder non pas une succession de lignes, comme expliqué ci-dessus, mais une succession de colonnes. Il est également possible de parcourir les lignes ou colonnes dans un sens ou dans l'autre

Selon un exemple, les blocs $B_1$, $B_2$, ..., $B_u$, ..., Bs ont une forme carrée et contiennent tous K pixels, avec $K \geq 1$. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc peut par ailleurs être lui-même divisé en sous-blocs qui sont eux-mêmes subdivisibles.

Au cours d'une étape C2 représentée à la **figure 1,** le codeur CO sélectionne comme bloc courant un premier bloc à coder $B_u$ de l'image $IC_j$, tel que par exemple le premier bloc $B_1$.

Au cours d'une étape C3 représentée à la **figure 1,** il est procédé à la prédiction du bloc courant $B_u$ par des techniques connues de prédiction intra et/ou inter. À cet effet, le bloc $B_u$ est prédit par rapport à au moins un bloc prédicteur conformément à un mode de prédiction sélectionné parmi une pluralité de modes de prédiction prédéterminés. Par exemple, il y a trente-cinq modes de prédiction prédéterminés respectivement de type intra.

Un tel bloc prédicteur est un bloc de K pixels qui a été déjà codé ou bien codé puis décodé ou non. Un tel bloc prédicteur est préalablement stocké dans la mémoire tampon TAMP_CO du codeur CO telle que représentée à la **figure 2.**

À l'issue de l'étape C3 de prédiction, un bloc prédicteur optimal $BP_{op}t$ est obtenu suite à une mise en compétition desdits modes de prédiction prédéterminés, par exemple par minimisation d'un critère débit distorsion bien connu de l'homme du métier. Le bloc $BP_{opt}$ est considéré comme une approximation du bloc courant $B_u$. Les informations relatives à cette prédiction sont destinées à être inscrites dans un signal ou flux de données à transmettre à un décodeur. De telles informations comprennent notamment le type de prédiction (inter ou intra), et le cas échéant, le mode de prédiction sélectionné, le type de partitionnement du bloc courant si ce dernier a été subdivisé, l'indice d'image de référence et le vecteur de déplacement utilisés dans le cas où un mode de prédiction inter a été sélectionné. Ces informations sont compressées par le codeur CO.

Au cours d'une étape C4 représentée à la **figure 1,** il est procédé à la comparaison des données relatives au bloc courant $B_u$ aux données du bloc prédicteur $BP_{opt}$. Plus précisément, au cours de cette étape, il est procédé classiquement au calcul de la différence entre le bloc courant $B_u$ et le bloc prédicteur obtenu $BP_{opt}$.

Un ensemble de données résiduelles, appelé bloc résidu $Br_u$ est alors obtenu à l'issue de l'étape C4. Le bloc résidu $Br_u$ contient K pixels résiduels $x_1$, $x_2$,..., $x_g$,...$x_K$, avec $1 \leq g \leq K$.

Les étapes C3 et C4 sont mises en oeuvre par un module logiciel de codage prédictif PRED_CO représenté sur la **figure 2,** lequel module est piloté par le microprocesseur µP de l'unité de traitement UT_CO.

Au cours d'une étape C5 représentée à la **figure 1,** le bloc résidu $Br_u$ est corrélé par multiplication/addition pixel par pixel à chaque bloc faisant partie d'un groupe Gi prédéfini de blocs contenant un nombre donné Mi de blocs $BT_1$, $BT_2$,...$BT_v$,..., $BT_{Mi}$ de chacun K pixels, lesdits blocs étant représentatifs chacun d'une texture prédéterminée, avec $i \geq 1$, $1 \leq Mi < K$ et $1 \leq v \leq M_i$.

Un bloc $BT_v$ de texture prédéterminée considéré dans le groupe Gi contient K pixels $t_{v,1}$, $t_{v,2}$, ...,$t_{v,g}$,..., $t_{v,K}$. Le groupe Gi prédéfini de blocs $BT_1$, $BT_2$, ...$BT_v$,..., $BT_{Mi}$ est stocké préalablement dans la mémoire MEM_CO du codeur CO de la **figure 2.**

Plus précisément au cours de l'étape C5, il est procédé au calcul de Mi données $X_{u,1}$, $X_{u,2}$, ..., $X_{u,Mi}$ qui sont des valeurs scalaires obtenues à l'aide de la relation suivante :

$$X_{u,v} = \sum_{g=1}^{K} t_{v,g} x_g$$

Une telle étape C5 est mise en oeuvre par un module logiciel de calcul CAL1_CO représenté sur la **figure 2,** lequel module est piloté par le microprocesseur µP de l'unité de traitement UT_CO.

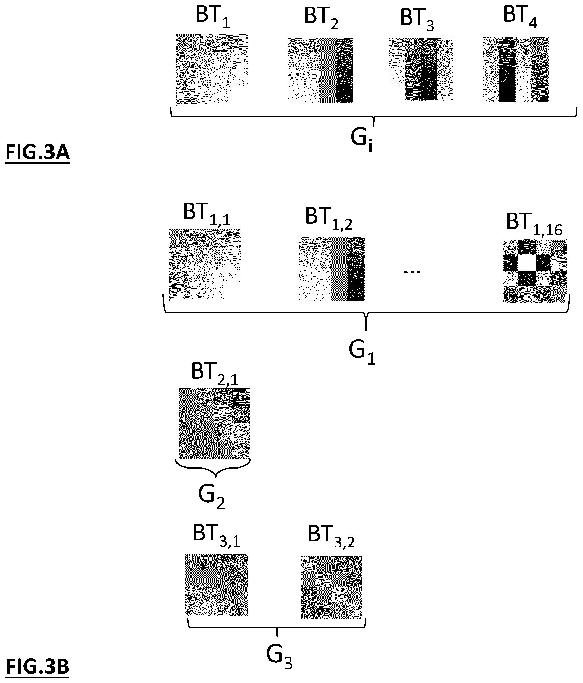

En référence à la **figure 3A,** est représenté un exemple d'un groupe Gi de Mi blocs de texture prédéterminée. Dans cet exemple, K=16 et Mi=4. Le groupe Gi contient donc quatre blocs de texture prédéterminée $BT_1$, $BT_2$, $BT_3$, $BT_4$ qui contiennent respectivement 16 pixels.

Au cours d'une étape C6 représentée à la **figure 1,** il est procédé à une quantification classique des Mi données $X_{u,1}$, $X_{u,2}$, ..., $X_{u,Mi}$. Un bloc $Bq_u$ caractérisé par Mi données quantifiées $X_{qu,1}$, $Xq_{u,2}$, ..., $Xq_{u,Mi}$ est alors obtenu. Une telle étape est effectuée au moyen d'un module logiciel de quantification MQ_CO tel que représenté à la **figure 2,** lequel module est piloté par le microprocesseur µP de l'unité de traitement UT_CO.

Au cours d'une étape C7 représentée à la **figure 1,** il est procédé au codage des informations d'amplitude et de signe associées à chacune des Mi données quantifiées $X_{qu,1}$, $Xq_{u,2}$, ... , $Xq_{u,Mi}$ du bloc $Bq_u$ de données quantifiées. Dans le mode préféré de réalisation, le codage effectué est un codage entropique de type arithmétique ou de Huffman. L'étape C7 consiste alors à :

- lire le ou les symboles de l'ensemble prédéterminé de symboles qui sont associés audit bloc $Bq_u$ de données quantifiées,
- associer des informations numériques, telles que des bits, au(x) symbole(s) lu(s).

Selon un autre exemple, les Mi données quantifiées sont codées d'une façon similaire à celle employée par HEVC. À cet effet, il est procédé au codage entropique (par exemple de type codage arithmétique ou codage de Huffman) des Mi données quantifiées de la façon suivante :

- une information est codée entropiquement pour indiquer l'emplacement de la dernière donnée quantifiée non nulle,
- pour chaque donnée quantifiée située avant la dernière donnée quantifiée non nulle, une information est codée entropiquement pour indiquer si la donnée quantifiée est nulle ou pas,
- pour chaque donnée quantifiée non nulle indiquée précédemment, une information est codée entropiquement pour indiquer si la donnée quantifiée est égale à un ou pas,
- pour chaque donnée quantifiée non nulle et non égale à un située avant la dernière donnée quantifiée non nulle, une information d'amplitude est codée entropiquement,

- pour chaque donnée quantifiée non nulle, le signe qui lui est affecté est codé par un '0' (pour le signe +) ou un '1' (pour le signe -).

Une telle étape de codage entropique est mise en oeuvre par un module logiciel de codage entropique MCE représenté sur la **figure 2,** lequel module est piloté par le microprocesseur µP de l'unité de traitement UT_CO. Le module de codage entropique MCE est par exemple de type CABAC ("Context Adaptive Binary Arithmetic Coder" en anglais). Il peut également s'agir d'un codeur de Huffman connu en tant que tel.

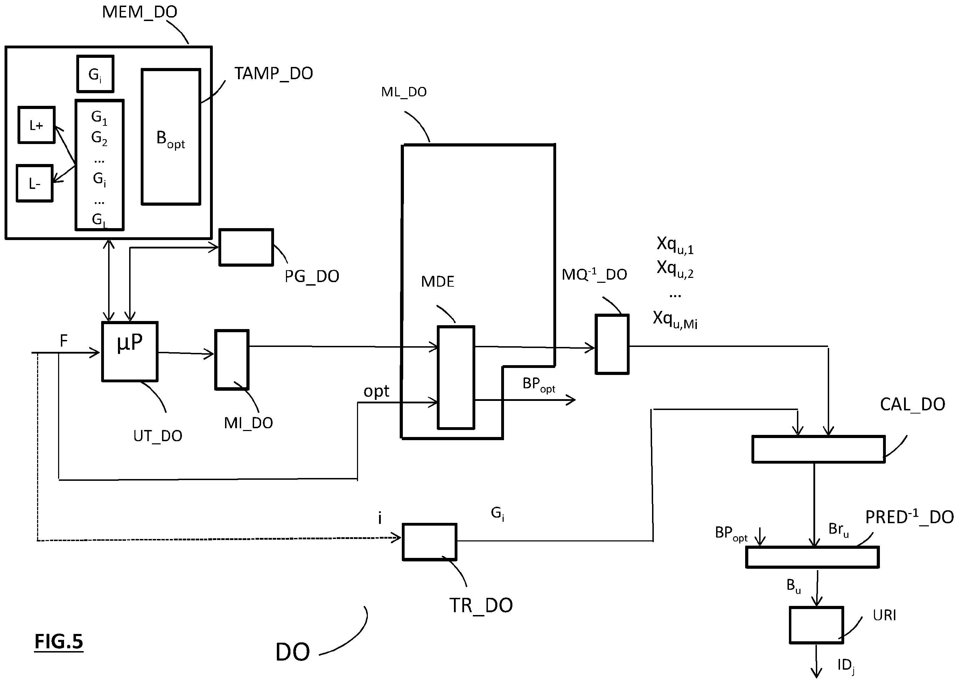

À l'issue de l'étape de codage C7 précitée, un signal ou flux de données F qui contient l'ensemble des données encodées du bloc $Bq_u$ de données quantifiées est alors délivré. Un tel flux est ensuite transmis par un réseau de communication (non représenté), à un terminal distant. Celui-ci comporte le décodeur DO représenté à la **figure 5.** De façon connue en soi, le flux F comprend en outre certaines informations encodées par le codeur CO, telles que le type de prédiction (inter ou intra), et le cas échéant, le mode de prédiction sélectionné, l'indice du le bloc prédicteur $BP_{opt}$ obtenu à l'issue de l'étape C3, le type de partitionnement du bloc courant $B_u$ si ce dernier a été partitionné, l'indice d'image de référence et le vecteur de déplacement utilisés dans le mode de prédiction inter.

Au cours d'une étape C8 représentée à la **figure 1,** il est procédé à la déquantification du bloc $Bq_u$ selon une opération classique de déquantification, qui est l'opération inverse de la quantification effectuée à l'étape C6. Un bloc $BDq_u$ de Mi données déquantifiées $XDq_{u,1}$, $XDq_{u,2}$, ..., $XDq_{u,Mi}$ est alors obtenu.

Une telle étape de déquantification est effectuée par un module logiciel de quantification inverse $MQ^{-1}$_CO, tel que représenté à la **figure 2,** lequel module est piloté par le microprocesseur µP de l'unité de traitement UT_CO.

Au cours d'une étape C9 représentée à la **figure 1,** chacune des Mi données déquantifiées $XDq_{u,1}$, $XDq_{u,2}$, ..., $XDq_{u,Mi}$ est multipliée par le nombre Mi de blocs de K pixels $BT_1$, $BT_2$,...$BT_v$,..., $BT_{Mi}$ de texture prédéterminée qui sont stockés dans la mémoire MEM_CO du codeur CO de la **figure 2.**

À l'issue de l'étape C9, Mi blocs résidus décodés $BDr_{u,1}$, $BDr_{u,2}$, ..., $BDr_{u,Mi}$ sont obtenus.

Au cours d'une étape C10 représentée à la **figure 1,** un bloc résidu décodé $BDr_u$ est déterminé en fonction des Mi blocs résidus décodés $BDr_{u,1}$, $BDr_{u,2}$, ..., $BDr_{u,Mi}$ obtenus.

Dans le cas particulier où Mi=1, c'est-à-dire qu'un seul bloc résidu décodé $BDr_{u,v}$ a été calculé, le bloc résidu décodé $BDr_u$ est égal au bloc résidu décodé $BDr_{u,v}$.

Dans le cas où $M_i$‡1, Plus précisément, le bloc résidu décodé $BDr_u$ est obtenu en additionnant les Mi blocs résidus décodés $BDr_{u,1}$, $BDr_{u,2}$, ..., $BDr_{u,Mi}$ à l'aide de la relation suivante :

$$BDr_u = \sum_{v=1}^{M_i} BDr_{u,v}$$

L'ensemble des étapes C9 à C10 précitées est effectué par un module logiciel de calcul CAL2_CO tel que représenté **figure 2,** lequel module est piloté par le microprocesseur µP de l'unité de traitement UT_CO.

Au cours d'une étape C11 représentée à la **figure 1,** il est procédé à la construction du bloc décodé courant $BD_u$ en ajoutant le bloc résidu décodé $BDr_u$ au bloc prédicteur $BP_{opt}$ obtenu à l'étape C3 précitée. Il est à noter que ce bloc $BD_u$ est le même que le bloc décodé obtenu à l'issue du procédé de décodage de l'image $IC_j$ qui sera décrit plus loin dans la description. Le bloc décodé $BD_u$ est alors stocké dans la mémoire tampon TAMP_CO de la **figure 2,** afin d'être utilisé par le codeur CO comme bloc prédicteur d'un bloc suivant à coder.

Une telle étape est mise en oeuvre par un module logiciel de codage prédictif inverse $PRED^1$_CO représenté sur la **figure 2,** lequel module est piloté par le microprocesseur µP de l'unité de traitement UT_CO.

Les étapes de codage C2 à C11 qui viennent d'être décrites ci-dessus sont ensuite mises en oeuvre pour chacun des blocs $B_1$, $B_2$, ..., $B_u$, ..., Bs à coder de l'image courante $IC_j$ considérée.

Le procédé de codage qui vient d'être décrit ci-dessus nécessite moins d'opérations de calcul que dans l'art antérieur précité, étant donné qu'à l'étape de calcul C5, le bloc résidu $Br_u$ est multiplié pixel par pixel par un nombre prédéfini Mi de blocs de K pixels $BT_1$, $BT_2$, ...$BT_v$,..., $BT_{Mi}$ qui est inférieur au nombre K de pixels du bloc courant $B_u$.

Il en résulte que les données codées à la suite de l'étape de codage entropique C7 sont en nombre plus réduit que dans l'art antérieur, ce qui permet d'améliorer le gain en débit de transmission de telles données à destination du décodeur DO de la **figure 5.**

Les quatre exemples mentionnés ci-dessous indiquent le nombre d'opérations pour obtenir les Mi données $X_{u,1}$, $X_{u,2}$, ..., $X_{u,Mi}$ suite à la mise en oeuvre de l'étape de calcul C5:

- si Mi=1 et K=256, seulement 256 multiplications sont à effectuer en comparaison des 2592 additions et 1056 multiplications effectuées lorsqu'une transformée rapide de type DCT ou DST est appliquée classiquement sur un bloc courant de 256 pixels,
- si $M_i$=1 et K=16, seulement 16 multiplications sont à effectuer en comparaison des 72 additions et 40 multiplications effectuées lorsqu'une transformée rapide de type DCT ou DST est appliquée classiquement sur un bloc courant de 16 pixels,
- si Mi=2 et K=256, seulement 256 additions et 512 multiplications sont à effectuer en comparaison des 2592 additions et 1056 multiplications effectuées lorsqu'une transformée rapide de type DCT ou DST est appliquée classiquement sur un bloc courant de 256 pixels,

- si Mi=2 et K=16, seulement 16 additions et 32 multiplications sont à effectuer en comparaison des 72 additions et 40 multiplications effectuées lorsqu'une transformée rapide de type DCT ou DST est appliquée classiquement sur un bloc courant de 16 pixels.

Dans le cas d'un codage HEVC, il est en outre possible de réduire le débit au cours de l'étape de codage entropique C7. Comme cela a déjà été expliqué plus haut dans l'introduction de la description, conformément au codage HEVC, les données quantifiées sont transmises en indiquant la position de la dernière donnée quantifiée non nulle. Une telle position est représentée par deux indicateurs appelés *posX* et *posY* qui indiquent, dans le bloc $Bq_u$ de Mi données quantifiées $Xq_{u,1}$, $Xq_{u,2}$,..., $Xq_{u,Mi}$, les coordonnées de la dernière donnée quantifiée non nulle.

Grâce à l'invention, les valeurs de *posX* et/ou *posY* peuvent être évitées d'être transmises et donc reçues dans le flux F.

Selon un premier exemple, Mi=1, il n'y a qu'une seule donnée quantifiée à transmettre. La position de cette unique donnée quantifiée est donc connue puisqu'il s'agit nécessairement de la première donnée quantifiée du bloc $Bq_u$. Ainsi, aucune des valeurs de *posX* et/ou *posY* n'est signalée dans le flux F.

Selon un deuxième exemple, Mi=2, il n'y a que deux données quantifiées $Xq_{u,1}$, $Xq_{u,2}$ à transmettre. À cet effet, seule la valeur de *posX* ou de *posY* a besoin d'être signalée, une seule signalisation étant suffisante pour couvrir les alternatives $Xq_{u,1}$ ou $Xq_{u,2}$. Une telle valeur de *posX* ou *posY* peut même être codée sur un seul bit, par exemple un bit mis à 0 pour indiquer que la dernière donnée quantifiée non nulle est $Xq_{u,1}$ et un bit mis à 1 pour indiquer que la dernière donnée quantifiée non nulle est $Xq_{u,2}$.

Il convient de noter cependant que la distorsion de l'image courante $IC_j$ peut être accrue compte tenu de la réduction de données codées qui est obtenue grâce au procédé de codage précité.

Afin de limiter cet effet, selon un autre exemple, la mémoire MEM_CO du codeur CO de la **figure 2** ne stocke plus un unique groupe Gi prédéfini de Mi blocs de texture $BT_1$, $BT_2$, ... $BT_v$, ..., $BT_{Mi}$ mais stocke L groupes $G_1$, $G_2$, ..., $G_i$, ..., $G_L$ de blocs de pixels, parmi lesquels figure le groupe Gi précité, les L groupes contenant respectivement un nombre $M_1$, $M_2$, ..., $M_i$,..., $M_L$ de blocs de K pixels représentatifs chacun d'une texture prédéterminée, avec 1≤i≤L.

En référence à la **figure 3B,** sont représentés L groupes $G_1$, $G_2$, ..., $G_i$, ..., $G_L$ de blocs de texture prédéterminée. Dans cet exemple, K=16 et L=3.

Le premier groupe $G_1$ contient un nombre $M_1$ de blocs de texture prédéterminée qui est par exemple égal au nombre de pixels du bloc courant, soit K=16. Par conséquent $M_1$=16. Ainsi, comme illustré sur la **figure 3B,** le groupe $G_1$ contient seize blocs de texture prédéterminée $BT_{1,1}$, $BT_{1,2}$, ..., $BT_{1,16}$ qui contiennent respectivement 16 pixels.

Le deuxième groupe $G_2$ contient un nombre $M_2$ de blocs de texture prédéterminée, tel que $M_2$=1. Ainsi, comme illustré sur la **figure 3B,** le groupe $G_2$ contient un unique bloc de texture prédéterminée $BT_{2,1}$ de 16 pixels.

Le troisième groupe $G_3$ contient un nombre $M_3$ de blocs de texture prédéterminée, tel que $M_3$=2. Ainsi, comme illustré sur la **figure 3B,** le groupe $G_3$ contient deux blocs de texture prédéterminée $BT_{3,1}$ et $BT_{3,2}$ contenant chacun 16 pixels.

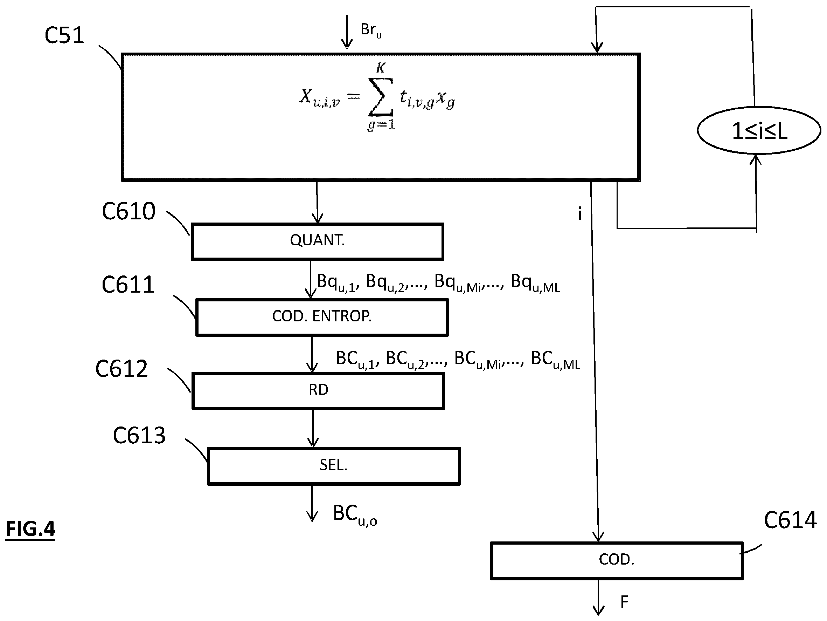

Conformément à la **figure 3B,** le procédé de codage est alors modifié à partir de l'étape C5 précitée, comme représenté sur la **figure 4.**

Au cours d'une étape C51 représentée à la **figure 4,** le module logiciel de calcul CAL1_CO de la **figure 2** détermine L ensembles de respectivement $M_1$, $M_2$, ..., $M_i$, ... $M_L$ données, par calcul du produit pixel à pixel du bloc résidu $Br_u$ déterminé à l'issue de l'étape C4 par chacun des $M_1$, $M_2$, ..., $M_i$, ... $M_L$ blocs de K pixels représentatifs d'une texture prédéterminée.

Plus précisément au cours de l'étape C51, pour un groupe Gi considéré de blocs de texture prédéterminée $BT_{i,1}$, $BT_{i,2}$, ...BTi,v, ..., BTi,mi, pour lequel un bloc BTi,v de texture prédéterminée considéré dans le groupe Gi contient K pixels $t_{i,v,1}$, $t_{i,v,2}$,...,$t_{i,v,g}$,..., $t_{i,v,K}$, il est procédé au calcul de Mi données $X_{u,i,1}$, $X_{u,i,2}$,..., $X_{u,i,Mi}$ qui sont des valeurs scalaires obtenues à l'aide de la relation suivante :

$$X_{u,i,v} = \sum_{g=1}^{K} t_{i,v,g} x_g$$

À l'issue de l'étape C51, L ensembles de respectivement $M_1$, $M_2$, ..., $M_i$,... $M_L$ données sont obtenus.

Au cours d'une étape C610 représentée à la **figure 4,** le module logiciel de quantification MQ_CO de la **figure 2** procédé à une quantification classique des $M_1$, $M_2$,..., $M_i$,..., $M_L$ données de chacun des L ensembles. L blocs $Bq_{u,1}$, $Bq_{u,2}$, ..., $Bq_{u,L}$ sont alors obtenus.

Au cours d'une étape C611 représentée à la **figure 4** et similaire à l'étape C7 précitée, il est procédé au codage des informations d'amplitude et de signe associées à chacune des $M_1$, $M_2$, ..., $M_i$,..., $M_L$ données quantifiées obtenues.

À l'issue de l'étape C611, L blocs de données codées $BC_{u,1}$, $BC_{u,2}$, ..., $BC_{u,i}$, ..., $BC_{u,L}$ sont obtenus.

Au cours d'une étape C612 représentée à la **figure 4,** pour chacun des L blocs de données codées $BC_{u,1}$, $BC_{u,2}$,..., $BC_{u,i}$,..., $BC_{u,L}$ obtenus en association avec chacun des L groupes $G_1$, $G_2$, ..., $G_i$,..., $G_L$ de blocs de de texture prédéterminée, le module logiciel de calcul CAL1_CO de la **figure 2** procède au calcul d'un critère RD de performance de codage prédéterminé, tel que le critère débit-distorsion bien connu de l'homme du métier.

Au cours d'une étape C613 représentée sur la **figure 4,** le bloc qui, parmi les L blocs de données codées $BC_{u,1}$, $BC_{u,2}$, ..., $BC_{u,i}$, ..., $BC_{u,L}$, minimise le critère débit-distorsion, est sélectionné pour la suite du procédé de codage. Un tel bloc de données codées est noté $BC_{u,o}$. Dans l'exemple, le bloc de données codées sélectionné est associé au groupe Gi de blocs de texture prédéterminée $BT_{i,1}$, $BT_{i,2}$, ... BTi,v, ..., $BT_{i,Mi}$.

Au cours d'une étape C614 représentée à la **figure 4,** il est procédé au codage d'une information d'identification du groupe Gi de blocs de texture prédéterminée qui est associé au bloc de données codées $BC_{u,0}$ sélectionné à la suite de l'étape C613 précitée. Une telle information est par exemple l'indice i du groupe Gi. L'indice i peut être représenté par un code à longueur fixe ou variable (de type Huffman ou code arithmétique).

Une telle étape de calcul est effectuée par un module logiciel de codage d'informations MCI_CO, tel que représenté à la **figure 2,** lequel module est piloté par le microprocesseur $\mu$P de l'unité de traitement UT_CO.

Des étapes identiques respectivement aux étapes C8 à C11 de la **figure 1** sont ensuite mises en oeuvre pour traiter le bloc de données quantifiées $Bq_{u,o}$ associé au bloc de données codées $BC_{u,o}$. Pour ces raisons, elles ne sont ni décrites, ni représentées sur la **figure 4.**

Le procédé de codage qui vient d'être décrit en liaison avec la **figure 4** permet ainsi de limiter l'augmentation de la distorsion grâce à une augmentation des possibilités de codage d'un bloc courant à l'aide de différents groupes disponibles au codage, contenant respectivement une pluralité de blocs de texture prédéterminée.

Selon un exemple du procédé de codage de la **figure 4** :

- au moins un groupe parmi les L groupes $G_1$, $G_2$, ..., $G_i$,..., $G_L$ de blocs de pixels contient K blocs de texture prédéterminée,
- au moins un groupe parmi les L-1 groupes restants de blocs de pixels contient un unique bloc de texture prédéterminée.

Selon un exemple préférentiel :

- un groupe parmi les L groupes $G_1$, $G_2$, ..., $G_i$,..., $G_L$ de blocs de pixels contient K blocs de texture prédéterminée,
- les L-1 groupes restants de blocs de pixels contiennent chacun un unique bloc de texture prédéterminée.

Dans un cas particulier où Mi=K, l'opération permettant :

- soit de calculer, au cours de l'étape C5 précitée, les K données $X_{u,1}$, $X_{u,2}$,..., $X_{u,K}$,
- soit de calculer, au cours de l'étape C51 précitée, les K données $X_{u,i,1}$, $X_{u,i,2}$,..., $X_{u,i,K}$,

est une transformée de type DST ou DCT telle qu'utilisée par exemple dans la norme HEVC.

Ainsi l'obtention des K données $X_{u,1}$, $X_{u,2}$, ..., $X_{u,K}$ ou des K données $X_{u,i,1}$, $X_{u,i,2}$,..., $X_{u,i,K}$ est avantageusement mise en oeuvre à l'aide d'un algorithme rapide bien connu de l'Homme du métier.

De façon avantageuse, le nombre L-1 est choisi en tant que puissance de 2. De cette manière, l'indice du groupe associé au bloc $BC_{u,o}$ de données codées sélectionné à la suite de l'étape C613 de la **figure 4** est signalé dans le flux F au moyen d'un drapeau, de la façon suivante :

- un drapeau mis par exemple à 0 indique que le bloc $BC_{u,o}$ de données codées sélectionné à la suite de l'étape C613 est celui associé au groupe qui contient K blocs de texture prédéterminée,
- un drapeau mis par exemple à 1 indique que le bloc $BC_{u,o}$ de données codées sélectionné à la suite de l'étape C613 est celui associé à l'un des L-1 groupes restants de blocs de pixels contenant chacun un unique bloc de texture prédéterminée.

Dans le cas d'un drapeau mis à 1, il est procédé, au cours de l'étape C614 précitée, au codage de l'indice i du groupe Gi associé au bloc $BC_{u,o}$ de données codées sélectionné à la suite de l'étape C613 et faisant partie des L-1 groupes restants de blocs de pixels qui contiennent chacun un unique bloc de texture prédéterminée. Un tel indice peut être représenté par un code à longueur fixe ou variable (de type Huffman ou code arithmétique).

Conformément à l'exemple de codage décrit cidessus, il a été observé qu'avec L=5, L=9, L=17 ou L=33, le codeur CO de la **figure 2** adopte de bons compromis en vue d'obtenir des performances de codage élevées, avec autant de compromis de complexité de stockage des groupes de blocs de texture prédéterminée qui contiennent soit 16 pixels, soit 64 pixels, soit 256 pixels.

Plus précisément, les meilleures performances de codage sont obtenues :

- pour un bloc courant $B_u$ de 16 pixels, avec un groupe contenant 16 blocs de texture prédéterminée et 32 autres groupes contenant chacun un unique bloc de texture prédéterminée,
- pour un bloc courant $B_u$ de 64 pixels, avec un groupe contenant 16 blocs de texture prédéterminée et 32 autres groupes contenant chacun un unique bloc de texture prédéterminée.

Selon une variante représentée sur la **figure 2,** parmi les L groupes $G_1$, $G_2$,...,$G_i$,..., $G_L$ de blocs de texture prédéterminée :

- les groupes de blocs de texture prédéterminée qui, après multiplication de chacun de leurs blocs de texture prédéterminée respectifs par le bloc résidu courant $Br_u$, puis quantification des valeurs scalaires obtenues, permettent d'obtenir des valeurs quantifiées positives du bloc $Bq_u$ de données quantifiées, sont stockés ensemble dans une première liste L+,
- tandis que les groupes de blocs de texture prédéterminée qui, après multiplication de chacun de leurs blocs de texture prédéterminée respectifs par le bloc résidu courant $Br_u$, puis quantification des valeurs scalaires obtenues, permettent d'obtenir des valeurs quantifiées négatives du bloc $Bq_u$ de données quantifiées, sont stockés dans une deuxième liste L-.

Que le procédé de codage soit mis en oeuvre selon l'exemple représenté sur la **figure 1** ou sur la **figure 4,** la constitution d'un groupe de blocs de texture prédéterminée ou de plusieurs groupes de blocs de texture prédéterminée est effectuée selon une méthode identique.

Une telle méthode consiste à générer un ou plusieurs groupes de blocs de texture prédéterminée par apprentissage.

À cet effet, préalablement au procédé de codage, un nombre important de blocs de données résiduelles est collecté.

On procède à un apprentissage en deux étapes principales.

Selon une première étape, il est procédé au rassemblement d'un ou plusieurs groupes différents $GP_1$, $GP_2$,..., $GP_w$,..., $GP_L$ de blocs de données résiduelles, avec $1 \leq w \leq L$.

Cette étape de rassemblement est réalisée par comparaison d'un critère de distorsion obtenu après codage/décodage de données résiduelles par chaque groupe de blocs de texture d'un ensemble de L groupes de blocs de texture $G_1$, $G_2$,..., $G_w$,..., $G_L$ qui comprennent respectivement $M_1$, $M_2$,..., $M_w$,..., $M_L$ blocs de texture. Un bloc de données résiduelles considéré est affecté à un groupe considéré $GP_w$ si la distorsion la plus faible est obtenue par le codage de ce bloc de données résiduelles considéré avec le groupe $G_w$ de blocs de texture correspondant.

Un groupe $GP_w$ contenant un nombre donné $N_w$ de blocs $BR_{w,1}$, $BR_{w,2}$,...., $BR_{w,z}$,..., $BR_{w,Nw}$ de données résiduelles est alors considéré parmi les groupes $GP_1$, $GP_2$,..., $GP_w$,..., $GP_L$.

Selon une seconde étape, pour ledit groupe $GP_w$ considéré, il est procédé à la mise à jour du groupe de blocs de texture pour ce groupe.

À cet effet, il est procédé :

- à la construction de $N_w$ blocs résiduels quantifiés courants $Bq_{u,w,1}$, $Bq_{u,w,2}$,...,$BC_{u,w,z}$, ..., $Bq_{u,w,Nw}$,
- au décodage des $N_w$ blocs résiduels quantifiés courants $Bq_{u,w,1}$, $Bq_{u,w,2}$,...,$Bq_{u,w,z}$, ..., $Bq_{u,w,Nw}$ pour obtenir respectivement $N_w$ blocs résiduels décodés $BDr_{u,w,1}$, $BDr_{u,w,2}$,...,$BDr_{u,w,z}$, ..., $BDr_{u,w,Nw}$, à l'aide de techniques classiques de déquantification.

Il est ensuite procédé à une mise à jour des blocs de texture du groupe Gw pour les rendre plus adaptés au codage des blocs de données résiduelles. Cette mise à jour est réalisée par une méthode d'identification entre l'ensemble des données résiduelles du groupe $GP_w$ considéré et les données résiduelles quantifiées avec le groupe $G_w$ de blocs de texture. Cette identification du groupe de blocs de texture optimal est réalisée de façon classique par décomposition en valeurs singulières (SVD) ou par analyse en composantes principales pour actualiser l'ensemble des blocs de texture $BT_{w,1}$, $BT_{w,2}$,... $BT_{w,v}$,..., $BT_{w,Mw}$ permettant de trouver le groupe de blocs de texture minimisant un critère de distorsion.

Le processus ci-dessus est réitéré, à savoir qu'il est procédé à nouveau au codage des blocs de données résiduelles du groupe $GP_w$ par l'ensemble de blocs de texture $BT_{w,1}$, $BT_{w,2}$,...$BT_{w,v}$,..., $BT_{w,Mw}$ actualisés, puis à la mise à jour desdits blocs de texture jusqu'à obtenir convergence du critère de distorsion.

Les opérations effectuées au cours de cette étape sont réitérées pour chacun des groupes $GP_1$ à $GP_L$ de blocs de données résiduelles afin d'obtenir respectivement $G_1$ à $G_L$ groupes de blocs de texture correspondants.

Les première et seconde étapes sont alors réitérées jusqu'à l'obtention de la convergence de la somme des distorsions obtenues pour chacun des groupes $GP_1$, $GP_2$,..., $GP_w$,..., $GP_L$ de blocs de données résiduelles. Les première et deuxième étapes précitées peuvent également inclure une métrique prenant en compte le nombre de données quantifiées transmises, notamment à l'aide d'une estimation du débit pour une quantification donnée.

Description détaillée de la partie décodage

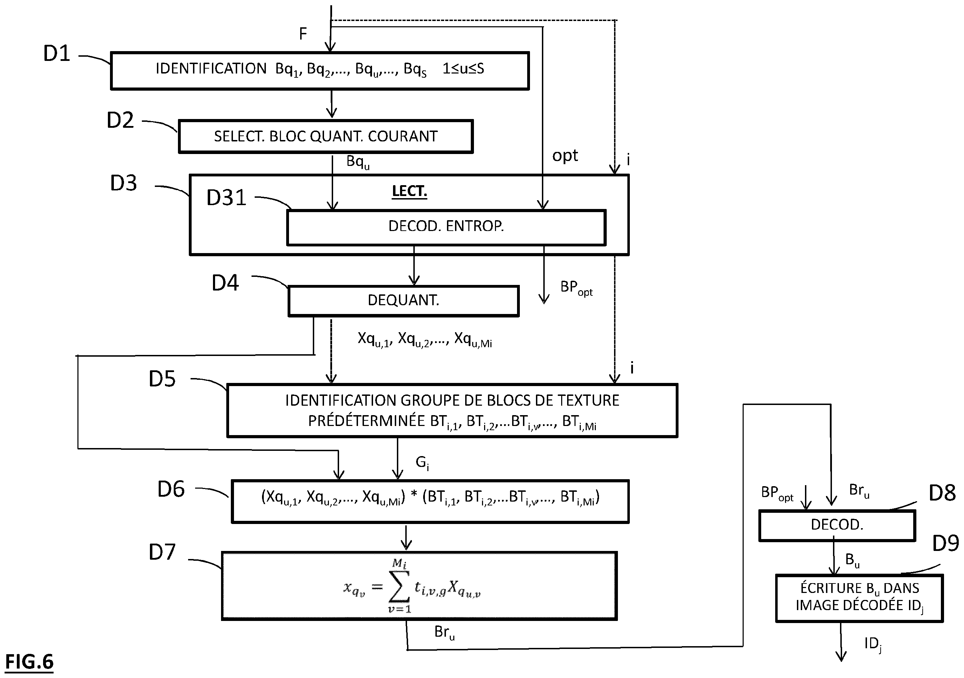

Un mode de réalisation du procédé de décodage selon l'invention va maintenant être décrit, dans lequel le procédé de décodage est implémenté de manière logicielle ou matérielle par modifications d'un décodeur initialement conforme à la norme HEVC. Le procédé de décodage selon l'invention est représenté sous la forme d'un algorithme comportant des étapes D1 à D9 telles que représentées à la **figure 6.**

Comme illustré en **figure 5,** le décodeur DO selon ce mode de réalisation de l'invention comprend une mémoire MEM_DO comprenant une mémoire tampon TAMP_DO, une unité de traitement UT_DO équipée par exemple d'un microprocesseur μP et pilotée par un programme d'ordinateur PG_DO qui met en oeuvre le procédé de décodage selon l'invention. A l'initialisation, les instructions de code du programme d'ordinateur PG_DO sont par exemple chargées dans une mémoire RAM avant d'être exécutées par le processeur de l'unité de traitement UT_DO.

Le procédé de décodage représenté sur la **figure 6** s'applique à toute image courante d'une séquence SQ d'images à décoder.

À cet effet, des informations représentatives de l'image courante $IC_j$ à décoder sont identifiées dans le signal ou flux de données F reçu au décodeur, tel que délivré à la suite du procédé de codage de la **figure 1** ou de la **figure 4.**

En référence à la **figure 6,** au cours d'une étape D1, il est procédé à l'identification dans ledit flux F des blocs quantifiés $Bq_1$, $Bq_2$,..., $Bq_u$, ...Bqs ($1 \le u \le S$) associés respectivement aux blocs $B_1$, $B_2$, ..., $B_u$,..., Bs codés précédemment conformément au parcours raster scan précité, conformément au procédé de codage de la **figure 1.**

Une telle étape d'identification est mise en oeuvre par un module d'identification MI_DO d'analyse de flux, tel que représenté à la **figure 5,** ledit module étant piloté par le microprocesseur µP de l'unité de traitement UT_DO.

Les blocs quantifiés $Bq_1$, $Bq_2$,..., $Bq_u$, ... Bqs sont destinés à être décodés selon un ordre de parcours prédéterminé, qui est par exemple séquentiel, c'est-à-dire que lesdits blocs sont destinés à être décodés l'un après l'autre conformément à l'ordre raster scan où ils ont été codés.

D'autres types de parcours que celui qui vient d'être décrit ci-dessus sont bien sûr possibles et dépendent de l'ordre de parcours choisi au codage, dont des exemples ont été mentionnés plus haut.

Dans le mode préféré de réalisation, les blocs à décoder ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc peut par ailleurs être lui-même divisé en sous-blocs qui sont eux-mêmes subdivisibles.

Au cours d'une étape D2 représentée à la **figure 6,** le décodeur DO de la **figure 5** sélectionne comme bloc courant le premier bloc quantifié $Bq_u$ qui contient les Mi données quantifiées $X_{qu,1}$, $Xq_{u,2}$,..., $Xq_{u,Mi}$ qui ont été codées au cours de l'étape C7 précitée.

Au cours d'une étape D3 représentée à la **figure 6,** en association avec le bloc quantifié $Bq_u$ qui a été sélectionné, il est procédé classiquement à la lecture :

- d'une information d'identification du bloc prédicteur $BP_{opt}$ qui a été sélectionné au cours de l'étape de prédiction C3 du procédé de codage représenté à la **figure 1** ou à la **figure 4,** une telle information consistant par exemple dans l'indice opt du bloc prédicteur $BP_{opt}$,
- d'informations relatives à la prédiction qui comprennent notamment le type de prédiction (inter ou intra), le type de partitionnement du bloc courant si ce dernier a été subdivisé, l'indice d'image de référence et le vecteur de déplacement utilisés dans le cas où un mode de prédiction inter a été sélectionné,
- des données quantifiées codées du bloc quantifié $Bq_u$ qui a été codé à l'étape C7 de la **figure 1.**

Uniquement dans le cas où le procédé de codage de la **figure 4** a été mis en oeuvre, au cours de l'étape de lecture D3, est également lue l'information d'identification du groupe Gi de blocs de texture prédéterminée $BT_{i,1}$, $BT_{i,2}$,...$BT_{i,v}$,..., BTi,mi, qui ont été multipliés respectivement par le bloc résidu $Br_u$ au cours de l'étape C51 du procédé de codage de la **figure 4.**

Une telle information d'identification consiste par exemple dans l'indice i du groupe Gi.

Cette étape de lecture D3 n'est pas utile dans le cas où le procédé de codage de la **figure** 1 a été mis en oeuvre car le groupe Gi est unique et est donc connu du décodeur DO de la **figure 5.**

L'étape de lecture D3 est effectuée par un module logiciel de lecture ML_DO, tel que représenté à la **figure 5,** lequel module est piloté par le microprocesseur µP de l'unité de traitement UT_DO.

Plus précisément, l'étape de lecture D3 comprend une sous-étape D31 de décodage des informations d'amplitude et de signe associées à chacune des Mi données quantifiées codées du bloc $Bq_u$ de données quantifiées. Dans le mode préféré de réalisation, le décodage de données est un décodage entropique de type arithmétique ou de Huffman. La sous-étape D31 consiste alors à :

- lire le ou les symboles de l'ensemble prédéterminé de symboles qui sont associés audit bloc $Bq_u$ de données quantifiées,
- associer des informations numériques, telles que des bits, au(x) symbole(s) lu(s).

À l'issue de la sous-étape D31 précitée, est obtenu un nombre Mi d'informations numériques associées respectivement aux Mi données quantifiées $X_{qu,1}$, $Xq_{u,2}$,..., $Xq_{u,Mi}$ qui ont été codées au cours de l'étape C7 précitée.

De façon connue en soi, au cours de la sous-étape D31 précitée, est également décodé l'indice opt du bloc prédicteur optimal $BP_{opt}$ qui a été utilisé pour prédire le bloc courant à l'étape C3 de la **figure** 1. À l'issue de cette opération, le bloc prédicteur $BP_{opt}$ correspondant, qui est stocké dans la mémoire tampon TAMP_DO du décodeur DO de la **figure 5,** est donc ainsi identifié. Un tel bloc prédicteur est par exemple un bloc de pixels qui a été déjà décodé ou non et qui a été obtenu conformément au mode de prédiction sélectionné au codage. Le bloc $BP_{opt}$ est une approximation du bloc courant $B_u$ à décoder.

Une telle sous-étape de décodage entropique D31 est mise en oeuvre par un module logiciel de décodage entropique MDE représenté sur la **figure 5,** lequel module est piloté par le microprocesseur µP de l'unité de traitement UT_DO. Le module de décodage entropique MDE est par exemple de type CABAC. Il peut également s'agir d'un décodeur de Huffman connu en tant que tel.

Au cours d'une étape D4 représenté à la **figure 6,** il est procédé à la déquantification des Mi informations numériques obtenues à la suite de la sous-étape D31, selon une opération classique de déquantification. Un bloc décodé $Bq_u$ de Mi données quantifiées $X_{qu,1}$, $Xq_{u,2}$,..., $Xq_{u,Mi}$ est alors obtenu.

Une telle étape de déquantification est effectuée par un module logiciel de quantification inverse $MQ^{-1}$_DO, tel que représenté à la **figure 5,** lequel module est piloté par le microprocesseur µP de l'unité de traitement UT_DO.

Au cours d'une étape D5 représenté à la **figure 6,** il est procédé à l'identification, dans la mémoire MEM_DO du décodeur DO de la **figure 5,** soit de l'unique groupe Gi de Mi de blocs $BT_1$, $BT_2$,...$BT_v$,..., $BT_{Mi}$ de texture prédéterminée, si c'est le procédé de codage de la **figure 1** qui a été mis en oeuvre, soit, parmi les L groupes $G_1$, $G_2$,...,$G_i$,..., $G_L$ de blocs de texture prédéterminée stockés en mémoire, du groupe Gi de blocs $BT_{i,1}$, $BT_{i,2}$,...$BT_{i,v}$,..., $BT_{i,Mi}$ de texture prédéterminée, si c'est le procédé de codage de la **figure 4** qui a été mis en oeuvre.

L'étape d'identification D5 précitée est effectuée par un module logiciel de traitement TR_DO, tel que représenté à la **figure 5,** lequel module est piloté par le microprocesseur µP de l'unité de traitement UT_DO.

Dans l'exemple représenté sur la **figure 6,** l'étape d'identification D5 est mise en oeuvre à la suite des étapes D3 et D4. Toutefois, l'étape d'identification D5 peut être également mise en oeuvre avant les étapes D3 et D4 ou parallèlement à ces dernières.

Dans le cas où c'est le procédé de codage de la **figure 1** qui a été mis en oeuvre, le module de traitement TR_DO identifie directement dans la mémoire MEM_DO du décodeur DO de la **figure 5** le seul et unique groupe Gi de Mi blocs $BT_1$, $BT_2$,...$BT_v$,..., $BT_{Mi}$ de texture prédéterminée.

Dans le cas où c'est le procédé de codage de la **figure 4** qui a été mis en oeuvre, à partir de l'indice i qui a été lu au cours de l'étape D3 précitée, le module de traitement TR_DO identifie dans la mémoire MEM_DO du décodeur DO de la **figure 5** le groupe correspondant Gi de blocs $BT_{i,1}$, $BT_{i,2}$,...$BT_{i,v}$,..., $BT_{i,Mi}$ de texture prédéterminée, parmi les L groupes $G_1$, $G_2$,...,$G_i$,..., $G_L$ de blocs de texture prédéterminée.

De façon similaire au procédé de codage, un bloc $BT_v$ de texture prédéterminée considéré dans le groupe Gi contient K pixels $t_{v,1}$, $t_{v,2}$, ..., $t_{v,g}$,..., $t_{v,K}$.

Au cours d'une étape D6 représentée sur la **figure 6,** il est procédé au calcul du produit de chacun des Mi blocs de K pixels du groupe Gi identifié à l'étape D5 par, respectivement, chacune des Mi données quantifiées $Xq_{u,1}$, $Xq_{u,2}$, ..., $Xq_{u,Mi}$, telles qu'obtenues à l'issue de l'étape de déquantification D4 précitée.

À l'issue de l'étape D6, Mi blocs décodés $Br_{u,1}$, $Br_{u,2}$, ..., $Br_{u,Mi}$ de données résiduelles sont obtenus.

Au cours d'une étape D7 représentée sur la **figure 6,** un bloc résiduel décodé $Br_u$ est déterminé en fonction des Mi blocs résiduels décodés $Br_{u,1}$, $Br_{u,2}$, ..., $Br_{u,Mi}$ obtenus.

Dans le cas particulier où Mi=1 et K=16, c'est-à-dire qu'un seul bloc résiduel décodé $Br_{u,v}$ a été calculé, le bloc résiduel décodé $Br_u$ est égal au bloc résiduel décodé $Br_{u,v}$.

Une telle disposition est particulièrement avantageuse au décodage car le nombre de données à décoder est beaucoup moins important que dans l'art antérieur pour lequel Mi=K. Il en résulte un décodage moins complexe et plus rapide.

Dans le cas où $M_i$‡1, le bloc résiduel décodé $Br_u$ est obtenu en additionnant les Mi blocs résiduels décodés $Br_{u,1}$, $Br_{u,2}$, ..., $Br_{u,Mi}$.

Plus généralement, l'étape D7 s'exprime selon la relation suivante :

$$x_{q_v} = \sum_{v=1}^{M_i} t_{i,v,g} X_{q_{u,v}}$$

avec

$$1 \le v \le K$$

À l'issue de l'étape D7, un bloc résiduel décodé $Br_u$ de K pixels $xq_1$, $xq_2$, ...., $xq_K$ est obtenu.

L'ensemble des étapes D6 à D7 précitées est effectué par un module logiciel de calcul CAL_DO tel que représenté à la **figure 5,** lequel module est piloté par le microprocesseur µP de l'unité de traitement UT_DO.

Au cours d'une étape D8 représentée à la **figure 6,** il est procédé à la construction du bloc décodé $B_u$ en ajoutant le bloc résidu décodé $Br_u$ au bloc prédicteur $BP_{opt}$ identifié à l'étape D3 précitée.

Une telle étape est mise en oeuvre par un module logiciel de décodage prédictif inverse $PRED^{-1}$_DO représenté sur la **figure 5,** lequel module est piloté par le microprocesseur µP de l'unité de traitement UT_DO.

À l'issue de l'étape D8, le bloc décodé $B_u$ obtenu est stocké dans la mémoire tampon TAMP_DO de la **figure 5,** afin d'être utilisé par le décodeur DO éventuellement comme bloc prédicteur d'un bloc suivant à décoder.

Au cours d'une étape D9 représentée à la **figure 6,** ledit bloc décodé $B_u$ est écrit dans une image décodée $ID_j$.

Une telle étape est mise en oeuvre par un module logiciel URI de reconstruction d'image tel que représenté sur la **figure 5,** ledit module étant piloté par le microprocesseur µP du module de traitement UT_DO.

Les étapes de décodage D2 à D9 qui viennent d'être décrites ci-dessus sont ensuite mises en oeuvre pour chacun des blocs $B_1$, $B_2$, ..., $B_u$, ..., Bs à décoder de l'image courante $IC_j$ considérée.

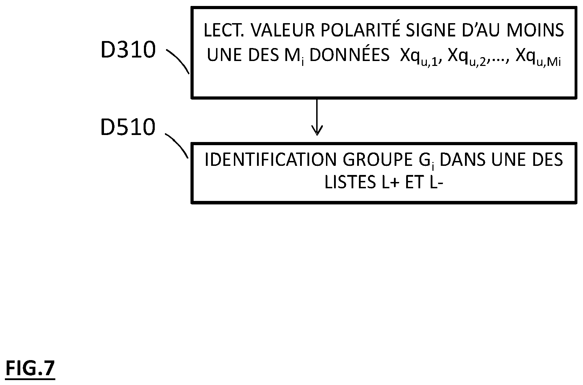

Dans une variante de réalisation du procédé de décodage telle que représentée sur la **figure 7,** l'étape de lecture D3 de la **figure 6** comprend en outre une étape D310 consistant à lire, dans le signal de données F, la valeur de la polarité du signe d'au moins une donnée lue parmi les Mi données $X_{qu,1}$, $Xq_{u,2}$, ..., $Xq_{u,Mi}$ du bloc quantifié $Bq_u$.

Une telle étape est mise en oeuvre par le module de lecture ML_DO de la **figure 5.**

Toujours en référence à la **figure 7,** l'étape d'identification D5 de la **figure 6** comprend en outre une étape D510 qui consiste, en fonction de la valeur de la polarité positive ou négative du signe d'au moins une des Mi données $X_{qu,1}$, $Xq_{u,2}$, ..., $Xq_{u,Mi}$ du bloc quantifié $Bq_u$ et à partir de l'information d'identification de groupe de blocs de pixels lue dans le signal F, à identifier le bloc de texture prédéterminée correspondant :

- soit dans la première liste L+ précitée qui est stockée dans la mémoire MEM_DO du décodeur DO de la **figure 5,** laquelle liste L+ contient les groupes de blocs de texture prédéterminée permettant d'obtenir des valeurs quantifiées positives du bloc $Bq_u$ de données quantifiées,
- soit dans la deuxième liste L- précitée qui est stockée dans la mémoire MEM_DO du décodeur DO de la **figure 5,** laquelle liste L- contient les groupes de blocs de texture prédéterminée permettant d'obtenir des valeurs quantifiées négatives du bloc $Bq_u$ de données quantifiées.

## Revendications

**1.** Procédé de décodage d'un signal de données (F) représentatif d'au moins une image ($IC_j$) découpée en blocs, comprenant, pour un bloc courant ($B_u$) de K pixels à reconstruire, avec K≥1, comprenant les étapes suivantes :

- déterminer (D31) au moins un bloc prédicteur (BPopt) du bloc courant à reconstruire, ledit bloc prédicteur contenant K pixels,
- lire (D3), dans ledit signal de données (F), un ensemble de Mi<K données, avec i≥1 et $1 \leq M_i < K$,
- lire (D35), dans ledit signal de données (F), une information d'identification d'un groupe (Gi) de blocs de pixels contenant un nombre donné Mi de blocs de K pixels représentatifs chacun d'une texture prédéterminée,
- identifier (D5) dans la mémoire du décodeur ledit groupe de blocs de pixels à partir de l'information lue,
- déterminer (D6) Mi blocs de K pixels par calcul du produit de chacun des Mi blocs de K pixels du groupe (Gi) identifié par, respectivement, chacune des Mi données dudit ensemble de Mi données lu,
- calculer (D7) la somme des Mi blocs de K pixels déterminés,
- déterminer (D7) un bloc résidu courant décodé de K pixels à partir de la somme calculée,
- reconstruire (D8) le bloc courant à partir du bloc résidu courant décodé calculé et du bloc prédicteur ($BP_{opt}$) déterminé.

**2.** Procédé de décodage selon la revendication 1, dans lequel l'ensemble de Mi données lu contient une seule donnée.

**3.** Procédé de décodage selon la revendication 1, dans lequel dans lequel le groupe (Gi) de blocs de pixels contenant un nombre donné Mi de blocs de K pixels représentatifs chacun d'une texture prédéterminée appartient à L groupes ($G_1$, $G_2$, ..., $G_i$, ..., $G_L$) de blocs de pixels contenant respectivement un nombre $M_1$, $M_2$, ..., $M_i$, ..., $M_L$ de blocs de K pixels représentatifs chacun d'une texture prédéterminée, avec $1 \leq i \leq L$.

**4.** Procédé de décodage selon la revendication 3, dans lequel :

- un groupe parmi les L groupes $G_1$, $G_2$, ..., $G_i$, ..., $G_L$ de blocs de pixels contient K blocs de texture prédéterminée,
- les L-1 groupes restants de blocs de pixels contiennent chacun un unique bloc de texture prédéterminée.

**5.** Dispositif (DO) de décodage d'un signal de données (F) représentatif d'au moins une image ($IC_j$) découpée en blocs, ledit dispositif étant configuré pour mettre en oeuvre :

- déterminer au moins un bloc prédicteur (BPopt) du bloc courant à reconstruire, ledit bloc prédicteur contenant K pixels,
- lire, dans ledit signal de données (F), un ensemble de Mi<Kdonnées, avec i≥1 et $1 \leq M_i < K$,
- lire, dans ledit signal de données (F), une information d'identification d'un groupe (Gi) de blocs de pixels contenant un nombre donné Mi de blocs de K pixels représentatifs chacun d'une texture prédéterminée,
- identifier dans la mémoire du décodeur ledit groupe de blocs de pixels à partir de l'information lue,
- déterminer Mi blocs de K pixels par calcul du produit de chacun des Mi blocs de K pixels du groupe (Gi) identifié par, respectivement, chacune des Mi données dudit ensemble de Mi données lu,
- calculer la somme des Mi blocs de K pixels déterminés,
- déterminer un bloc résidu courant décodé de K pixels à partir de la somme calculée,
- reconstruire le bloc courant à partir du bloc résidu courant décodé calculé et du bloc prédicteur ($BP_{opt}$) déterminé,

**6.** Programme d'ordinateur comportant des instructions pour mettre en oeuvre le procédé de décodage selon l'une quelconque des revendications 1 à 4, lorsque ledit procédé de décodage est exécuté sur un ordinateur.

SQ
$IC_1, \ldots, IC_j, \ldots, IC_M$
$IC_j$
C1
PARTITION. $IC_j$ / $B_1, B_2, \ldots, B_u, \ldots, B_S$ $1 \leq u \leq S$
C2
SELECT. BLOC COURANT
$B_u$
C3
PRÉDICTION BLOC COURANT $B_u$
$BP_{opt}$
C4
$B_u$-$BP_{opt}$
$Br_u$
C5
$\sum_{g=1}^{K} t_{v,g} x_g$ $1 \leq v \leq Mi < K$
$X_{u,1}, X_{u,2}, \ldots, X_{u,Mi}$
C6
QUANT.
$Bq_u = Xq_{u,1}, Xq_{u,2}, \ldots, Xq_{u,Mi}$
C7
COD. ENTROP.
F
C8
DEQUANT.
$BDq_u(XDq_{u,1}, XDq_{u,2}, \ldots, XDq_{u,Mi})$
C9
**x** $BT_1, BT_2, \ldots, BT_{Mi}$
$BDr_{u,1}, BDr_{u,2}, \ldots, BDr_{u,Mi}$
C10
FONCTION
$BDr_u$
C11
DECOD.
$BD_u$

**FIG.1**

MEM_CO
TAMP_CO
BP_opt
L+
L-
G1 G2 ... Gi ... GL
Gi
µP
UT_CO
ICj
MP_CO
Bu
PG_CO
PRED_CO
Bru
CAL1_CO
Xu,1 Xu,2 ... Xu,Mi
MQ_CO
Xqu,1 Xqu,2 ... Xqu,Mi
MCE
F
MCI_CO
i
MQ-1_CO
CAL2_CO
PRED-1_CO
BDqu
BDru
BDu
ICM ... ICj ... IC1
SQ
CO


$$X_{u,i,v} = \sum_{g=1}^{K} t_{i,v,g} x_g$$

$$X_{u,v} = \sum_{g=1}^{K} t_{v,g} x_g$$

**FIG.2**

BT1
BT2
BT3
BT4
Gi
BT1,1
BT1,2
...
BT1,16
G1
BT2,1
G2
BT3,1
BT3,2
G3

FIG.3A

FIG.3B

1≤i≤L
C614
COD.
F
i
$Br_u$
$X_{u,i,v} = \sum_{g=1}^{K} t_{i,v,g} x_g$
C51
QUANT.
C610
$Bq_{u,1}, Bq_{u,2}, \ldots, Bq_{u,Mi}, \ldots, Bq_{u,ML}$
COD. ENTROP.
C611
$BC_{u,1}, BC_{u,2}, \ldots, BC_{u,Mi}, \ldots, BC_{u,ML}$
RD
C612
SEL.
C613
$BC_{u,o}$

FIG.4

MEM_DO
$G_i$
TAMP_DO
L+
L-
$G_1$ $G_2$ ... $G_i$ ... $G_I$
$B_{opt}$
ML_DO
PG_DO
MDE
$MQ^{-1}$_DO
$Xq_{u,1}$
$Xq_{u,2}$
...
$Xq_{u,Mi}$
F
µP
UT_DO
MI_DO
opt
$BP_{opt}$
CAL_DO
i
$G_i$
$BP_{opt}$
$Br_u$
$PRED^{-1}$_DO
$B_u$
TR_DO
URI
DO
$ID_j$


FIG.5

F
D1
IDENTIFICATION $Bq_1, Bq_2, \ldots, Bq_u, \ldots, Bq_S$ $1 \leq u \leq S$
D2
SELECT. BLOC QUANT. COURANT
$Bq_u$
opt
i
D3
LECT.
D31
DECOD. ENTROP.
D4
DEQUANT.
$BP_{opt}$
$Xq_{u,1}, Xq_{u,2}, \ldots, Xq_{u,Mi}$
i
D5
IDENTIFICATION GROUPE DE BLOCS DE TEXTURE PRÉDÉTERMINÉE $BT_{i,1}, BT_{i,2}, \ldots BT_{i,v}, \ldots, BT_{i,Mi}$
$G_i$
D6
$(Xq_{u,1}, Xq_{u,2}, \ldots, Xq_{u,Mi}) * (BT_{i,1}, BT_{i,2}, \ldots BT_{i,v}, \ldots, BT_{i,Mi})$
D7
$x_{q_v} = \sum_{v=1}^{M_i} t_{i,v,g} X_{q_{u,v}}$
$Br_u$
$BP_{opt}$
$Br_u$
D8
DECOD.
$B_u$
D9
ÉCRITURE $B_u$ DANS IMAGE DÉCODÉE $ID_j$
$ID_j$

FIG.6

LECT. VALEUR POLARITÉ SIGNE D'AU MOINS UNE DES $M_i$ DONNÉES $Xq_{u,1}$, $Xq_{u,2}$,…, $Xq_{u,Mi}$
IDENTIFICATION GROUPE $G_i$ DANS UNE DES LISTES L+ ET L-
D310
D510

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20130089151 A